# EUROPÄISCHE PATENTSCHRIFT

(11) **EP 0 504 158 B1**
(45) Veröffentlichungstag und Bekanntmachung des Hinweises auf die Patenterteilung: **08.06.1994**
(21) Anmeldenummer: 90916459.2
(22) Anmeldetag: 10.11.1990
(51) Int. Cl.: G11B 7/125

(54) **SCHALTUNGSANORDNUNG ZUM BETRIEB EINER LICHTQUELLE FÜR DIE OPTISCHE ABTASTUNG VON AUFZEICHNUNGSTRÄGERN**
CIRCUIT ARRANGEMENT FOR OPERATING A LIGHT SOURCE FOR THE OPTICAL SCANNING OF RECORDING SUBSTRATES
CIRCUIT POUR L'EXPLOITATION D'UNE SOURCE DE LUMIEREDESTINEE AU BALAYAGE OPTIQUE DE SUPPORTS D'ENREGISTREMENT

(30) Priorität: 09.12.1989 DE 3940720
(43) Veröffentlichungstag der Anmeldung: 23.09.1992
(73) Patentinhaber: ROBERT BOSCH GMBH, 70442 Stuttgart (DE)
(72) Erfinder: SCHMID, Helmut, D-3156 Hohenhameln (DE); RÖSINGER, Andreas, D-3000 Hannover 51 (DE); NÖTZEL, Günter, W-3201 Diekholzen (DE)
(86) Internationale Anmeldenummer: DE9000853
(87) Internationale Veröffentlichungsnummer: WO9109399

(56) Entgegenhaltungen:
- EP-A- 0 169 579
- DE-A- 3 232 682
- US-A- 4 689 795
- US-A- 4 692 606
- US-A- 4 698 797
- US-A- 4 733 398
- PATENT ABSTRACTS OF JAPAN, Band 11, Nr. 9, P 534;& JP-A-61184742

## Beschreibung

Die Erfindung geht aus von einer Schaltungsanordnung nach der Gattung des Hauptanspruchs.

Beim Lesen von Daten von optischen Aufzeichnungsträgern, insbesondere von sogenannten Compact Discs (CDs) ist zur Erzielung einer möglichst hohen Güte des von dem opto-elektrischen Wandler erzeugten Signals eine optimale Einstellung der Leistung des Lasers erforderlich. Aus der US-PS 4 698 797 ist ein CD-Lesegerät bekannt, bei dem das von der CD reflektierte und von der Leseeinrichtung empfangene Informationssignal mit einer Kontrollschaltung ausgewertet wird. Dabei regelt die Kontrollschaltung die Ausgangsleistung einer als Sender wirkenden Laserdiode derart, daß der Pegel des empfangenen Informationssignals entsprechend einer vorgegebenen, festen Referenzspannung auf einen konstanten Wert gehalten wird. Dabei kann durch Temperaturänderungen, Alterung und Verschmutzung ein Signal mit schlechterem Störabstand entstehen, das zu einer höheren Fehlerrate bei den ausgelesenen Daten führt.

Aufgabe der vorliegenden Schaltungsanordnung ist es, die einwandfreie Funktion eines CD-Lesegerätes unabhängig von Temperatur- und anderen Umwelteinflüssen sicherzustellen und eine möglichst geringe Fehlerrate zu gewährleisten.

Die erfindungsgemäße Schaltungsanordnung mit den kennzeichnenden Merkmalen des Hauptanspruchs hat den Vorteil, daß die Ausgangsleistung des Lasers unabhängig von den obengenannten Einflüssen einen optimalen Wert einnimmt.

Durch die in den Unteransprüchen aufgeführten Maßnahmen sind vorteilhafte Weiterbildungen und Verbesserungen der im Hauptanspruch angegebenen Erfindung möglich.

Unter anderem ermöglichen Weiterbildungen der Erfindung eine Ermittlung derjenigen Richtung, in welcher die Ausgangsleistung des Lasers jeweils zu verändern ist. Im einzelnen kann die Erfindung mit Hilfe von analogen oder digitalen Schaltungen oder mit geeigneten Mikrocomputern und Signalprozessoren sowie entsprechenden Programmen verwirklicht werden.

Ausführungsbeispiele der Erfindung sind in der Zeichnung anhand mehrerer Figuren dargestellt und in der nachfolgenden Beschreibung näher erläutert. Es zeigt:
- Fig. 1: ein erstes Ausführungsbeispiel, bei welchem ein Gütesignal mit Hilfe eines Hüllkurvendetektors abgeleitet wird,
- Fig. 2: ein zweites Ausführungsbeispiel, bei welchem ein Gütesignal aus einem Fehlersignal abgeleitet wird,
- Fig. 3: ein drittes Ausführungsbeispiel, bei welchem die erfindungsgemäße Schaltung mit Hilfe eines Mikrocomputers realisiert ist, und
- Fig. 4: ein Ausführungsbeispiel, bei welchem die Funktion der erfindungsgemäßen Schaltungsanordnung von einem Signalprozessor übernommen wird, welcher ferner die Verarbeitung der Ausgangssignale des opto-elektrischen Wandlers einschließlich der Fehlerkorrektur durchführt.

Gleiche Teile sind in den Figuren mit gleichen Bezugszeichen versehen.

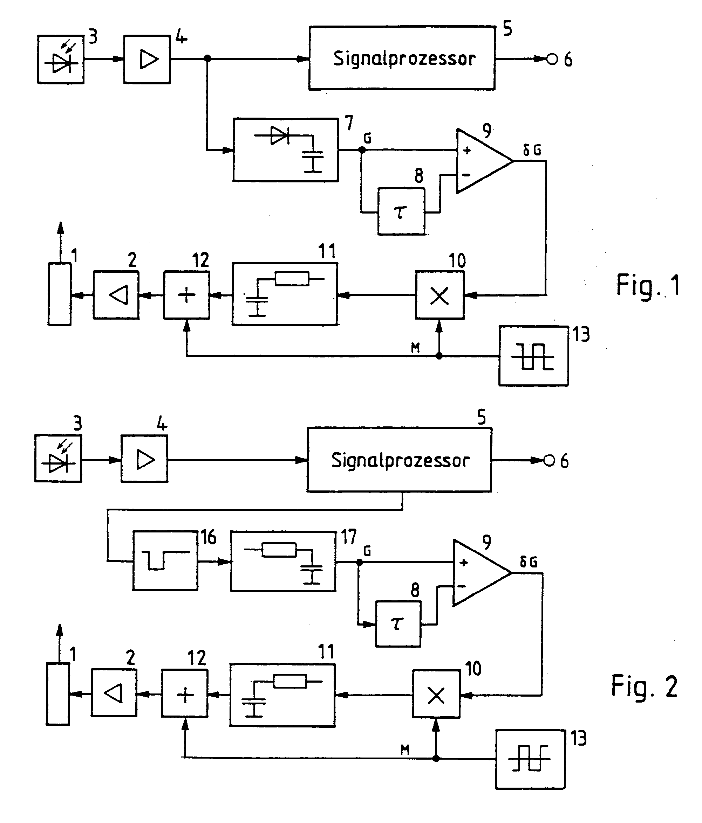

In Fig. 1 sind von einem bekannten CD-Lesegerät lediglich ein Laser 1, eine Endstufe 2, eine Empfängerdiode 3, die als opto-elektrischer Wandler dient, ein Vorverstärker 4 und ein Signalprozessor 5 dargestellt, dessem Ausgang 6 die gelesenen Daten entnommen werden können. Weitere Einzelheiten von CD-Lesegeräten sind an sich bekannt und brauchen im Zusammenhang mit der vorliegenden Erfindung nicht näher erläutert zu werden.

Bei dem Ausführungsbeispiel nach Fig. 1 wird das Ausgangssignal des Vorverstärkers 4 zur Erzeugung eines Gütesignals über einen Hüllkurvendetektor 7 geleitet. Bei optimaler Einstellung der Leistung des Lasers 1 weist das Ausgangssignal des Vorverstärkers 4 die größte Amplitude auf, so daß das Gütesignal G den Maximalwert annimmt. Bei ungünstigeren Bedingungen wird das Gütesignal G entsprechend kleiner. Mit einer Verzögerungsschaltung 8 und einer Vergleichsschaltung 9 wird die Änderung δG des Gütesignals G ermittelt. Das Ausgangssignal der Vergleichsschaltung 9 wird im folgenden Güte-Änderungsignal genannt.

Über einen Multiplizierer 10 gelangt das Güte-Änderungssignal zu einem Regler 11, der im wesentlichen ein Integralregler ist. Das Ausgangssignal des Reglers 11 wird über einen Addierer 12 dem Eingang der Endstufe 2 zugeleitet. Sowohl der Multiplizierer 10 als auch der Addierer 12 erhalten von einem Generator 13 eine Wechselspannung (Modulationsspannung M), deren Frequenz wesentlich geringer ist als die den aufgezeichneten Daten zugrundeliegende Abtastfrequenz.

Während der positiven Halbwelle der Modulationsspannung M wird die Leistung des Lasers 1 gegenüber der von dem Regler vorgegebenen Leistung erhöht. Die Auswirkung auf die Signalamplitude und damit auf das Gütesignal G kann je nachdem, auf welcher Seite eines Maximums sich der derzeitige Regelzustand befindet, eine Verbesserung oder Verschlechterung sein. Bei einer Verbesserung ist das Güte-Änderungssignal δG ebenfalls positiv, was durch die Multiplikation bei 10 mit einem positiven Wert zu einer positiven Eingangsspannung für den Regler 11 führt. Dieser wiederum erhöht sein Ausgangssignal entsprechend. Hat jedoch die Erhöhung der Laser-Leistung innerhalb der positiven Halbwelle der Modulationsspannung M eine Verschlechterung ergeben, so wird das Güte-Änderungssignal δG negativ, so daß sich ein negatives Eingangssignal für den Regler und damit auch eine (allmähliche) Verringerung des Ausgangssignals ergibt.

In der zweiten Halbwelle erfolgt eine Verringerung der Leistung des Lasers. Unter der Annahme, daß jetzt auch noch der Laser unterhalb seiner optimalen Leistung betrieben wird, wird durch diese Verringerung das Gütesignal G kleiner - und damit das Güte-Änderungssignal δG negativ. Durch Multiplikation des negativen Güte-Änderungssignals δG mit der negativen Halbwelle des Signals M entsteht dann ein positives Signal, welches eine weitere Erhöhung der Ausgangsleistung des Lasers mit Hilfe des Reglers 11 unterstützt. Falls das Güte-Änderungssignal oder die Modulationsspannung M als rein binäres Signal erzeugt wird, kann die Multiplikation mit einem Verstärker durchgeführt werden, der abhängig vom binären Signal invertierend bzw. nichtinvertierend betrieben wird.

Durch den beschriebenen Prozeß wird die Leistung des Reglers optimiert, wobei die Auswirkungen der Modulation auf die Güte der gelesenen Signale äußerst gering sind. Im Falle eines binären Güte-Änderungssignals, das also nur zwei Zustände "Güte ist niedriger" oder "Güte ist höher" einnehmen kann, wird die gleiche Wirkung wie durch den Multiplizierer auch mit einer Exklusiv-Oderschaltung erzielt.

Die Verknüpfung von Güte-Änderungssignal und Modulationsspannung kann auch durch einen Halbleiterschalter erfolgen, der entweder bei positivem Güte-Änderungssignal die Modulationsspannung oder bei positiver Modulationsspannung das Güte-Änderungssignal zum Regler 11 führt.

Bei dem Ausführungsbeispiel nach Fig. 2 wird das Gütesignal G aus einem Fehlersignal abgeleitet, was im Prozessor 5 eines bekannten CD-Lesegerätes ohnehin entsteht. Das Fehlersignal besteht aus Impulsen, die jeweils auftreten, wenn der Prozessor 5 einen Fehler erkennt. Diese Impulse werden zunächst über einen Impulsformer 16 geleitet, der aus einer monostabilen Schaltung besteht, und Impulse konstanter Breite abgibt. Diese Impulse sind von einem konstanten Wert zwischen den Impulsen nach 0V gerichtet. In einer anschließenden Mittelwertbildung wird daraus eine Gleichspannung abgeleitet, deren Wert umso niedriger ist, je häufiger die Impulse auftreten. Ansonsten gleicht das Ausführungsbeispiel gemäß Fig. 2 dem in Fig. 1 dargestellten. Je nach Voraussetzungen im einzelnen kann der Fachmann zwischen den beiden dargestellten Arten der Ableitung eines Gütesignals wählen.

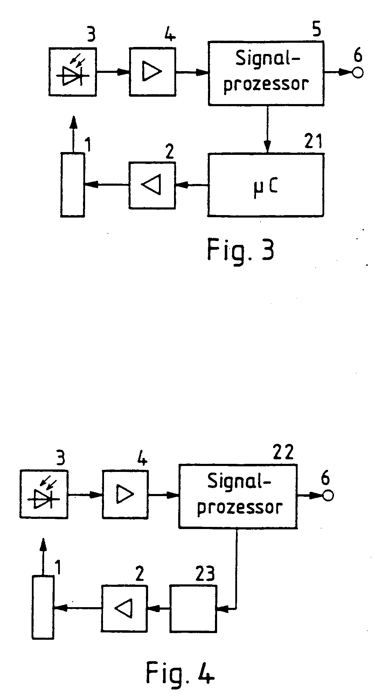

Fig. 3 zeigt ein Ausführungsbeispiel, bei welchem die Funktionen der Baugruppen 7 bis 12, sowie 16 und 17 der Schaltungsanordnung nach Fig. 2 von einem Mikrocomputer 21 wahrgenommen werden. Geeignete Mikrocomputer sind an sich bekannt. Das für die erfindungsgemäße Regelung erforderliche Programm umfaßt im wesentlichen diejenigen Funktionen, die bereits im Zusammenhang mit den einzelnen Schaltungsblöcken in Fig. 2 beschrieben wurden. In ähnlicher Weise kann auch die Schaltungsanordnung nach Fig. 1 mit Hilfe eines Mikrocomputers realisiert werden. Dazu kann beispielsweise nach dem Hüllkurvendetektor 7 ein Analog/Digital-Wandler vorgesehen sein, an welchem ein Eingang des Mikrocomputers angeschlossen ist.

Bei dem Ausführungsbeispiel gemäß Fig. 4 übernimmt ein Signalprozessor 22 zusätzlich zur Verarbeitung der gelesenen Signale auch die Regelung der Leistung des Lasers in der bereits im Zusammenhang mit den Figuren 1 und 2 beschriebenen Weise. Da im allgemeinen die Regelung der Leistung des Lasers nur allmählichen Änderungen zu folgen hat, braucht der Signalprozessor 22 nur dann Signalverarbeitungsschritte für die Regelung auszuführen, wenn keine Verarbeitung des Informationssignals erfolgt. Dieses ist beispielsweise dann der Fall, wenn das CD-Lesegerät zwar in Betrieb ist, jedoch keine Daten am Ausgang 6 benötigt werden.

Die jeweils ermittelte Stellgröße kann dabei in einem Speicher im Signalprozessor gespeichert werden, wobei relativ häufig eine Ausgabe der gespeicherten Daten an die Endstufe 2 (über einen nicht dargestellten Digital/Analog-Wandler) erforderlich ist. Es ist jedoch möglich, den Signalprozessor 22 auch hiervon zu entlasten und einen separaten Speicher 23 für die Stellgröße vorzusehen.

## Patentansprüche

1. Schaltungsanordnung zum Betrieb einer Lichtquelle (1) für die optische Äbtastung von Aufzeichnungsträgern, insbesondere sogenannte Compact Discs, mit einer Regelung (11) der Leistung für die Lichtquelle (1) und mit einem optischen Empfänger (3), der durch Abtastung der Compact Disc ein Informationssignal empfängt, das zur Regelung der Leistung für die Lichtquelle (1) verwendbar ist, dadurch gekennzeichnet, daß aus dem Informationssignal ein Gütesignal (G) abgeleitet wird, dessen Amplitude durch die Leistung der Lichtquelle (1) beeinflußbar ist, daß das Maximum des Informationssignals oder ein Minimum der Fehlerrate des ausgelesenen Informationssignals das Maximum des Gütesignals (G) bestimmt und daß die Leistung der Lichtquelle (1) durch den Maximalwert des Gütesignals (G) vorgebbar ist.

2. Schaltungsanordnung nach Anspruch 1, dadurch gekennzeichnet, daß die Leistung der Lichtquelle im wesentlichen periodisch modulierbar ist.

3. Schaltungsanordnung nach einem der vorhergehenden Ansprüche, dadurch gekennzeichnet, daß die Schaltungsanordnung, vorzugsweise eine Verzögerungsschaltung (8) und eine Vergleichsschaltung (9) aufweist, die zur Ermittlung einer Änderung des Gütesignals (δ G) ausgebildet sind, und daß die Schaltungsanordnung einen Wechselspannungsgenerator (13) aufweist, der geeignet ist, ein Modulationssignal (M) zu erzeugen, das mit der Änderung des Gütesignals (δ G) verknüpfbar ist.

4. Schaltungsanordnung nach Anspruch 3, dadurch gekennzeichnet, daß die Verknüpfung der Signale (M,δG) durch einen Multiplizierer (10) erfolgt.

5. Schaltungsanordnung nach Anspruch 3, dadurch gekennzeichnet, daß die Verknüpfung durch einen Halbleiterschalter erfolgt.

6. Schaltungsanordnung nach Anspruch 3, dadurch gekennzeichnet, daß bei einem binären Güte-Änderungssignal (δG) und einen binären Modulationssignal (M) die Verknüpfung durch eine Exlusiv-Oderschaltung erfolgt.

7. Schaltungsanordnung nach einem der vorhergehenden Ansprüche, dadurch gekennzeichnet, daß die Schaltungsanordnung einem Hüllkurvendetektor aufweist, der das Gütesignal (G) aus der Amplitude des Informationssignals, vorzugsweise durch Hüllkurvengleichrichtung ermittelt.

8. Schaltungsanordnung nach Anspruch 1, dadurch gekennzeichnet, daß die Schaltungsanordnung eine Fehlerkorrekturschaltung aufweist aus deren Impulse das Gütesignal (G) ableitbar ist.

9. Schaltungsanordnung nach Anspruch 8, dadurch gekennzeichnet, daß die Schaltungsanordnung ausgebildet ist, das analoge Gütesignal (G) aus den Impulsen durch Formung von Impulsen konstanter Breite und anschließender Mittelwertbildung zu ermitteln.

10. Schaltungsanordnung nach Anspruch 3, dadurch gekennzeichnet, daß die Schaltungsanordnung einen Mikrocomputer (21) aufweist und daß der Mikrocomputer (21) geeignet ist, die Erzeugung des Modulationssignals (M), die Ableitung des Güte-Änderungssignals (δG) und die Verknüpfung der Signale durchzuführen.

11. Schaltungsanordnung nach Anspruch 1, dadurch gekennzeichnet, daß ein an sich für die Verarbeitung der Informationssignale vorgesehener Signalprozessor (22) ferner eine versuchsweise Herauf- und Herabsetzung der Leistung der Lichtquelle (1) bewirkt, ein Gütesignal (G) und die Änderung des Gütesignals (δG) berechnet, die Änderung des Gütesignals vorzeichenrichtig in Abhängigkeit vom Herauf- oder Herabsetzen der Leistung integriert und als Stellsignal für die Leistung ausgibt.

12. Schaltungsanordnung nach Anspruch 11, dadurch gekennzeichnet, daß im Signalprozessor (22) Signalverarbeitungsschritte für die Regelung während derjenigen Zeiten erfolgen, in denen eine Verarbeitung des Informationssignals nicht erforderlich ist.

13. Schaltungsanordnung nach Anspruch 10, dadurch gekennzeichnet, daß die Verarbeitungsschritte für die Regelung in Zeiten erfolgen, in denen eine Verarbeitung des Informationssignals nicht erfolgt.

## Claims

1. Circuit arrangement for operating a light source (1) for the optical scanning of recording media, especially so-called compact discs, having a regulation (11) of the power for the light source (1) and having an optical receiver (3), which, by scanning the compact disc, receives an information signal which can be used for the regulation of the power for the light source (1), characterized in that a quality signal (G) is derived from the information signal, the amplitude of which quality signal can be influenced by the power of the light source (1), in that the maximum of the information signal or a minimum of the error rate of the information signal read out determines the maximum of the quality signal (G), and in that the power of the light source (1) is predeterminable by the maximum value of the quality signal (G).

2. Circuit arrangement according to Claim 1, characterized in that the power of the light source is modulable substantially periodically.

3. Circuit arrangement according to one of the preceding claims, characterized in that the circuit arrangement preferably exhibits a delay circuit (8) and a comparator circuit (9), which are designed to determine a change of the quality signal (δ G), and in that the circuit arrangement exhibits an alternating voltage generator (13) which is suitable to generate a modulation signal (M) which can be linked to the change in the quality signal (δ G).

4. Circuit arrangement according to Claim 3, characterized in that the linking of the signals (M, δ G) takes place by a multiplier (10).

5. Circuit arrangement according to Claim 3, characterized in that the linking takes place by a semiconductor switch.

6. Circuit arrangement according to Claim 3, characterized in that in the case of a binary quality change signal (δ G) and a binary modulation signal (M), the linking takes place by an exclusive-or gate.

7. Circuit arrangement according to one of the preceding claims, characterized in that the circuit arrangement exhibits an envelope curve detector which determines the quality signal (G) from the amplitude of the information signal, preferably by envelope curve rectification.

8. Circuit arrangement according to Claim 1, characterized in that the circuit arrangement exhibits an error correction circuit from the pulses of which the quality signal (G) can be derived.

9. Circuit arrangement according to Claim 8, characterized in that the circuit arrangement is designed to determine the analogue quality signal (G) from the pulses by shaping of pulses of constant width and subsequent mean-value formation.

10. Circuit arrangement according to Claim 3, characterized in that the circuit arrangement exhibits a microcomputer (21), and in that the microcomputer (21) is suitable to carry out the generation of the modulation signal (M), the derivation of the quality change signal (δ G) and the linking of the signals.

11. Circuit arrangement according to Claim 1, characterized in that a signal processor (22) which is per se provided for the processing of the information signals, further effects an experimental raising and lowering of the power of the light source (1), computes a quality signal (G) and the change of the quality signal (δ G), integrates the change of the quality signal with correct sign as a function of the raising or lowering of the power, and outputs said change as actuating signal for the power.

12. Circuit arrangement according to Claim 11, characterized in that in the signal processor (22) signal processing steps take place for the regulation during those times in which a processing of the information signal is not necessary.

13. Circuit arrangement according to Claim 10, characterized in that the processing steps for the regulation take place in times in which a processing of the information signal does not take place.

## Revendications

1. Circuit d'exploitation d'une source de lumière (1) pour le balayage optique de supports d'enregistrement, notamment de ce que l'on appelle des compacts-disques, avec une régulation (11) de la puissance de la source de lumière (1) et avec un récepteur optique (3) qui, du fait du balayage du compact-disque, reçoit un signal d'information susceptible d'être utilisé pour la régulation de la puissance de la source de lumière (1), circuit caractérisé en ce qu'à partir du signal d'information est dérivé un signal de qualité (G) dont l'amplitude est susceptible d'être influencée par la puissance de la source lumineuse (1), en ce que le maximum du signal d'information ou bien un minimum de taux d'erreurs du signal d'information lu, détermine le maximum du signal de qualité (G) et en ce que la puissance de la source lumineuse (1) est susceptible d'être prédéfinie par la valeur maximale du signal de qualité (G).

2. Circuit selon la revendication 1, caractérisé en ce que la puissance de la source lumineuse est essentiellement susceptible d'être modulée périodiquement.

3. Circuit selon l'une des précédentes revendications, caractérisé en ce que ce circuit comporte, de préférence, un circuit de retard (8) et un circuit de comparaison (9) prévus pour la détermination d'une modification du signal de qualité ( δG), et en ce que le circuit comporte un générateur de tension alternative (13) susceptible de produire un signal de modulation (M) pouvant être combiné avec la modification du signal de qualité ( δG).

4. Circuit selon la revendication 3, caractérisé en ce que la combinaison des signaux (M, δG) est effectuée par un multiplicateur (10).

5. Circuit selon la revendication 3, caractérisé en ce que la combinaison est effectuée par un commutateur à semi-conducteurs.

6. Circuit selon la revendication 3, caractérisé en ce que, dans le cas d'un signal binaire de modification de la qualité (δG) et d'un signal binaire de modulation (M), la combinaison est effectuée par un circuit OU exclusif.

7. Circuit selon l'une des précédentes revendications, caractérisé en ce que ce circuit comporte un détecteur de courbes enveloppes qui détermine le signal de qualité (G) à partir de l'amplitude du signal d'information, de préférence par redressement des courbes enveloppes.

8. Circuit selon la revendication 1, caractérisé en ce que ce circuit comporte un circuit de correction de défauts à partir des impulsions duquel le signal de qualité (G) est susceptible d'être dérivé.

9. Circuit selon la revendication 8, caractérisé en ce que ce circuit est prévu pour déterminer le signal analogique de qualité (G) à partir des impulsions, par formation d'impulsions de largeur constante et ensuite formation de la valeur moyenne.

10. Circuit selon la revendication 3, caractérisé en ce que ce circuit comporte un micro-ordinateur (21) et en ce que ce micro-ordinateur (21) est susceptible d'assurer la production du signal de modulation (M), la dérivation du signal de modification de la qualité ( δG) et la combinaison des signaux.

11. Circuit selon la revendication 1, caractérisé en ce qu'un processeur de signal (22) prévu en soi pour le traitement des signaux d'information, provoque en outre, à titre d'essai, une augmentation et une réduction de la puissance de la source lumineuse (1), calcule un signal de qualité (G) et la modification de ce signal de qualité ( δG), intègre la modification du signal de qualité en tenant compte du signe en fonction de l'augmentation ou de la réduction de la puissance, et émet cette intégration en tant que signal de réglage pour la puissance.

12. Circuit selon la revendication 11, caractérisé en ce que dans le processeur de signal (22) s'effectuent des étapes de traitement des signaux pour la régulation pendant les périodes dans lesquelles un traitement du signal d'information n'est pas nécessaire.

13. Circuit selon la revendication 10, caractérisé en ce que les étapes de traitement pour la régulation s'effectuent pendant des périodes dans lesquelles un traitement du signal d'information n'est pas effectué.
